# EUROPEAN PATENT APPLICATION

(11) **EP 2 554 879 A2**
(43) Date of publication of application: **06.02.2013**
(21) Application number: 12178544.8
(22) Date of filing: 30.07.2012
(51) Int. Cl.: F16J 15/32

(54) **Outward bristle brush seal design for gas turbine application**

(30) Priority: 03.08.2011 US 201113197329
(71) Applicant: General Electric Company, Schenectady, NY 12345 (US)
(72) Inventor: Martin, Thomas Paul, Greenville, SC South Carolina 29602-0648 (US); Sha, Karimulla Shaik, 560066 Bangalore, Karataka (IN)
(74) Representative: Cleary, Fidelma

(57) **Abstract**

A brush seal assembly (10) for use between two stationary turbine components (38,48) includes a plurality of arcuate carrier segments, each having a front plate (12) and a back plate (14) having substantially equal radial length dimensions, and a bristle pack (26) sandwiched therebetween. The front plate and the back plate define a hook portion (16) adapted to be received in an annular slot in a first radially inner turbine component, the bristle pack extending substantially radially outwardly beyond the front and back plates and supported by the back plate (14) along the entire radial length dimension and by the front plate along a minor portion (30) of the radial length dimension, thereby leaving an axial gap (34) between the bristle pack (26) and the front plate (12) along a major portion of the radial length dimension. The bristle pack (26) is fixedly secured to the back plate (14) and the front plate along the minor portion (30) of the length dimension, and the bristle pack (26) is slanted in a circumferential clockwise or counterclockwise direction and adapted to sealingly contact a second radially outward turbine component (48).

## Description

### BACKGROUND

The present invention relates generally to gas turbine compressors and, in an exemplary but nonlimiting example, to seals between static components at exit stages of the compressor.

Seals are oftentimes employed between static components of a turbine. For example, in a steam turbine, seals between the inlet and the inner web of the first stage nozzle have included a plurality of labyrinth seal teeth mounted on sealing ring segments which may be spring biased to engage and seal against the opposing stationary component surface. The packing ring seals carrying the labyrinth seal teeth can be preloaded and oriented in either radially outward or radially inward directions, depending on which component of the inlet region the seals are mounted. While labyrinth seals have been effective for minimizing leakage flows in these high pressure regions, the static annular or cylindrical seal components may become out-of-round or distorted, which can result in increased leakage flow from the high pressure region to the low pressure end seal packing ring region. Thermal distortion or creep of one or both of the components can cause an out-of-roundness and the creation of a gap between the tips of the labyrinth seal teeth and the surface that they are sealing against. Thus, as long as the labyrinth seal teeth and the component parts remain circular, the labyrinth teeth are effective to minimize leakage flows. However, if one or both of the sealing surfaces becomes out-of-round, a generally crescent-shaped gap is created between the tips of the teeth and the adjacent sealing surface, resulting in leakage across the seal through the gap and a performance loss.

Another static seal arrangement is shown in commonly-owned U. S. Patent No. 6,951,339. In that patent, a turbine construction includes a nozzle supporting a plurality of airfoils circumferentially spaced one from the other between inner and outer barrels, and carrying an inner web. In the inlet region of the turbine flowpath, a static brush seal is disposed between the inlet and a radially-opposed flange of the inner web. The brush seal includes a plurality of bristles disposed between a pair of side plates on opposite axial sides of the bristles. The brush seal is carried by either the inner web or the inlet, and the bristles are preloaded to engage the other of the inner web or inlet.

In other situations, a leak passage exists between the last stage/exit vane tips/shrouds supported from outer casing structures and inner casing structures of a compressor that can affect compressor performance in two ways. The leakage air can either reenter and mix with the main compressor flow and cause aero-performance losses or, the leakage air can pass through the high pressure packing region (both stator and rotor) and reduce compressor efficiency.

There remains a need for improved static sealing efficiency with respect to gaps or leak passages that exist between stationary last stage/exit vanes/tip shrouds supported from outer case structures, and stationary, radially-adjacent inner casing structures e.g., between the inner barrel of the compressor discharge case(CDC) and a stator vane shroud ring at the compressor exit stage(s).

### BRIEF SUMMARY OF THE INVENTION

In accordance with one exemplary but nonlimiting embodiment, the invention provides a brush seal assembly for use between two stationary turbine components comprising a plurality of arcuate carrier segments, each having a front plate and a back plate having substantially equal radial length dimensions, and a bristle pack sandwiched therebetween, the front plate and the back plate defining a hook portion adapted to be received in an annular slot in a first radially inner turbine component, the bristle pack extending radially outwardly beyond the front and back plates and supported by the back plate along the entire radial length dimension and by the front plate along a minor portion of the radial length dimension, thereby leaving an axial gap between the bristle pack and the front plate along a major portion of the radial length dimension; the bristle pack fixedly secured to the back plate and the front plate along the minor portion of the length dimension; and wherein the bristle pack is slanted in a circumferential clockwise or counterclockwise direction.

In another exemplary but nonlimiting embodiment, the invention provides a brush seal assembly located between radially inner and radially outer turbine components, substantially concentrically arranged relative to each other, and each having upper and lower half-sections joined along a substantially horizontal split line, comprising at least three arcuate brush seal segments seated in an arcuate slot in the radially inner turbine component and which, when combined, form a half-annular seal terminating at the substantially horizontal split line; each of the at least three arcuate brush seal segments having a front plate and a back plate and a bristle pack sandwiched therebetween, the bristle pack extending radially outwardly beyond the front and back plates and engaged with the radially-outer turbine component in a cold condition and slanted in a circumferential clockwise or counterclockwise direction; and wherein two of the at least three arcuate brush seal segments adjacent the split line have bristle packs with radial length dimensions less than remaining ones of the at least three arcuate brush seal segments.

In still another exemplary but nonlimiting embodiment, the invention provides a brush seal assembly located radially between an annular inner barrel of a compressor and an annular stator vane shroud ring for preventing leakage flow in a direction opposite to a direction of main flow through the compressor, the shroud ring comprised of plural arcuate shroud ring segments, and wherein the annular inner barrel and the stator vane shroud ring each have upper and lower half-sections joined along a substantially horizontal split line, the brush seal assembly comprising a plurality of arcuate brush seal segments seated in an annular slot formed in the inner barrel, each of the plurality of arcuate brush seal segments having a front plate and a back plate and a bristle pack sandwiched therebetween, the bristle pack extending radially outwardly beyond the front and back plates and engaged with the stator vane shroud ring in a cold condition, the bristle pack slanted in a circumferential clockwise or counterclockwise direction and in an axial forward or aft direction; and wherein the arcuate shroud ring segments are, in number, equal to or greater than the brush seal segments.

The invention will now be described in detail in connection with the drawings identified below.

### BRIEF DESCRIPTION OF THE DRAWINGS

Fig. 1 is a section view of an arcuate segment incorporating a brush seal in accordance with a first exemplary but nonlimiting embodiment;
Fig. 2 is a partial section view of the arcuate segment shown in Fig. 1 expanded to show more of the CDC inner barrel and a compressor exit stage stator vane shroud ring, with the brush seal assembly located at a forward end of the CDC inner barrel;
Fig. 3 is a perspective view, partially sectioned, of the brush seal assembly of Fig. 1 seated in the CDC inner barrel;
Fig. 4 is and end view of an annular, segmented brush seal assembly in accordance with an exemplary but nonlimiting embodiment;
Fig. 5 is an enlarged detail 5 taken from Fig. 4;
Fig. 6 is an enlarged detail 6 taken from Fig. 4;
Fig. 7 is an enlarged detail for a brush seal segment located in radial opposition to an interface between a pair of adjacent vane shroud ring segments;
Fig. 8 is a partial perspective of a brush seal segment and an anti-rotation locking key in accordance with another feature of the invention;
Fig. 9 is a partial section view similar to Fig. 2 but illustrating an alternative brush seal assembly;
Fig. 10 is a simplified schematic similar to Fig. 9 but illustrating a brush seal relocated to an aft end of the CDC inner barrel in light of a differently configured compressor exit stage stator vane shroud ring;
Fig. 11 is a schematic generally similar to Fig. 2 but illustrating an alternative brush seal assembly at the forward end of the CDC inner barrel;
Fig. 12 is a schematic showing how the bristle pack in a forward-located brush seal assembly may be slanted or inclined in one axial direction; and
Fig. 13 is a schematic similar to Fig. 13 but showing how the bristle pack in an aft-located brush seal assembly may be slanted or inclined in an opposite axial direction.

### DETAILED DESCRIPTION OF THE INVENTION

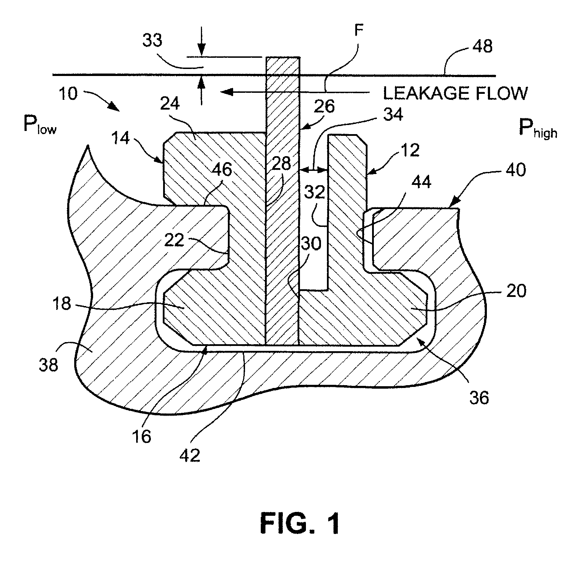

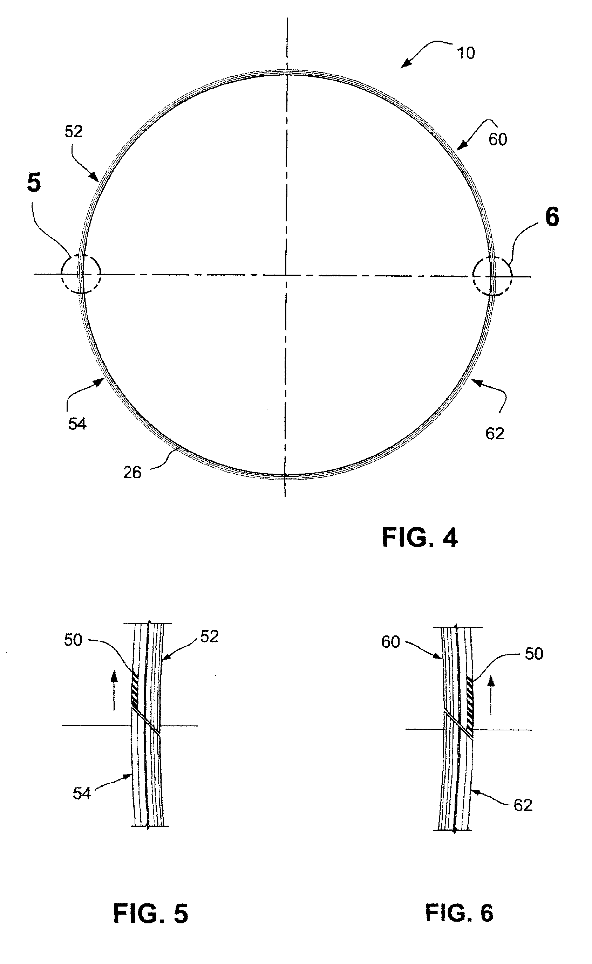

With reference initially to Figs. 1-3, a static brush seal assembly 10 in accordance with a first exemplary but nonlimiting embodiment is located radially between an annular, stationary, inner barrel portion (or, simply, inner barrel) 38 of the compressor discharge casing (CDC) 40 and a stationary stator vane shroud ring 48. The brush seal assembly 10 includes a plurality of arcuate segments which, when assembled, form an annular brush seal ring (see Fig. 4) as discussed further herein. Each arcuate segment of the brush seal assembly 10 is composed of a front plate 12 and a back plate 14 located on opposite sides of a brush or bristle pack 26. The front and back plates together form a radially-inner hook 16. Specifically, the hook 16 is defined by the relatively wide inner hook portion 18 of the back plate 14 and a similar relatively wide inner hook portion 20 of the front plate 12.

Extending radially outwardly from the inner hook portion 18 of the back plate 14, there is relatively narrow neck 22 extending to a radially outer and relatively wide outer hook portion or flange 24. As noted above, the brush or bristle pack 26 is sandwiched between the front plate 12 and the back plate 14, and extends substantially radially outwardly beyond the outermost surfaces of both the front and back plates 12, 14, respectively. The brush or bristle pack 26 is substantially fully engaged along a surface 28 of the back plate 14 which faces the front plate 12. The bristle pack 26 is also engaged by a surface 30 of the front plate 12 that faces the back plate 14. The surface 30, however, extends only a small or minor portion of the radial length of the front plate 12 and connects to an offset radial surface 32 of the front plate 12, leaving a radially-extending, axial gap 34 between a major portion of the length of the bristle pack 26 and the surface 30 of the front plate 12. The front and back plates 12 and 14, taken together, have a generally I-beam shape, with one side of the radially-outer I-beam "flange" omitted (axially-opposed to the outer hook flange 24), and with the partial radial gap 34 added in a direction perpendicular to the inner and outer "flanges" or hooks.

The arcuate segments of the brush seal assembly 10 are located within an inverted T-shaped slot 36 formed in the annular, stationary, inner barrel 38 of the CDC 40. Thus, the inner hook 16 of each of the brush seal assembly segments 10 is received within the wider cross portion 42 of the T-shaped slot, while the narrow neck portion 22 is received within a stem portion 44 of the T-shaped slot. The outer hook portion 24 is supported on an axial surface 46 of the inner barrel 38. The gap 34, which may be on the order of 0.10 in. in width, accommodates changes in bristle pack width due to radial excursion loading with the mating part. i.e. with inner barrel 38. Differential axial length dimensions for the inner hook portions 18 and 20 relative to the width of the stem portion 44 of the T-shaped slot 36 insure against improper reverse installation of the segments within the T-shaped slot.

The bristle pack 26 may be formed of metal bristles, or non-metal bristles made from materials such as ceramics, carbon fiber or silica. The bristle pack 26 is secured between the facing surfaces 30 and 28 of the front and back plates 12, 14, respectively, by welding, crimping, high temperature adhesives or other suitable attachment techniques.

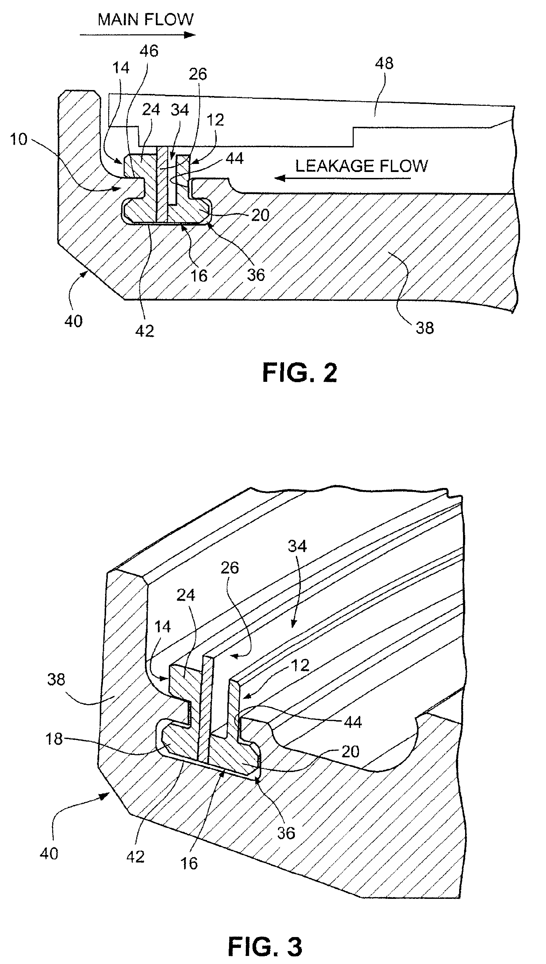

It may be seen that the bristle pack 26 is engaged with the stationary stator vane shroud ring 48 that surrounds the inner barrel 38 in order to seal leakage flow axially along the inner barrel, between the inner barrel and the stator vane shroud ring. As shown in Figs. 1 and 2, the leakage flow direction is indicated by the flow arrow F, which is opposite the main flow of air exiting the compressor indicated in Fig. 2. However, the invention also contemplates employing the brush seal assembly in situations where the main flow and leakage are in the same direction.

As noted above, the brush seal assembly may be composed of plural arcuate segments which, together, make up a 360° annular brush seal ring (see Fig. 4) received in the annular T-shaped slot 36. As will be discussed further herein, the arcuate segments may be arranged to have abutting edges at the horizontal interfaces between the upper and the lower half-sections of the inner barrel 38 and shroud ring 48, sometimes referred to as the horizontal "split line". For purposes of discussion herein, it will be assumed that there are at least three brush seal segments above and below the split line, although the invention is not so limited. It is also noted here that the stator vane shroud ring is also composed of plural arcuate segments and in the preferred arrangement, the number of shroud segments is equal to or unequal to the number of brush seal segments.

Thus, the bristle pack 26 extends substantially radially outwardly between two stationary turbine components 38, 48, with an interference fit between the free ends of the bristles of the bristle pack and the stator vane shroud ring 48. In this regard, the cold interference in the exemplary embodiment is about 0.05 in. and the cold gap 34 is between about 0.10 to 0.14 in. The cold interference is shown at 33 in Fig. 1 by indicating that portion of the length of the bristle pack which extends beyond the surface of the vane shroud ring 48 with which it is engaged. In reality, the bristle pack will be compressed and thus slanted to one side to accommodate the interference fit. In the exemplary embodiment, the bristles 50 (Figs. 5-7) of the bristle pack 26 may be slanted in a clockwise circumferential direction, viewing the brush assembly from a downstream position (relative to the compressor main flow). In Figs. 5-7, the bristles 50 in substantially diametrically opposed segments 52 and 60 are slanted or inclined in a clockwise direction. In the exemplary embodiment, the angle may be, for example 45°±5°, and may be substantially identical to angled segment end cuts. It will be appreciated however, that the bristles 50 may be slanted in either a clockwise or counterclockwise circumferential direction. The specified cold build radial interference with the vane shroud ring 48 maximizes the seal effectiveness at operating conditions, countering the effects of 3D distortions (out of roundness effects), hot opening due to thermal loading of the parts, and manufacturing tolerance stack-up variations that can lead to gap opening between the bristle pack and the vane shroud ring 48.

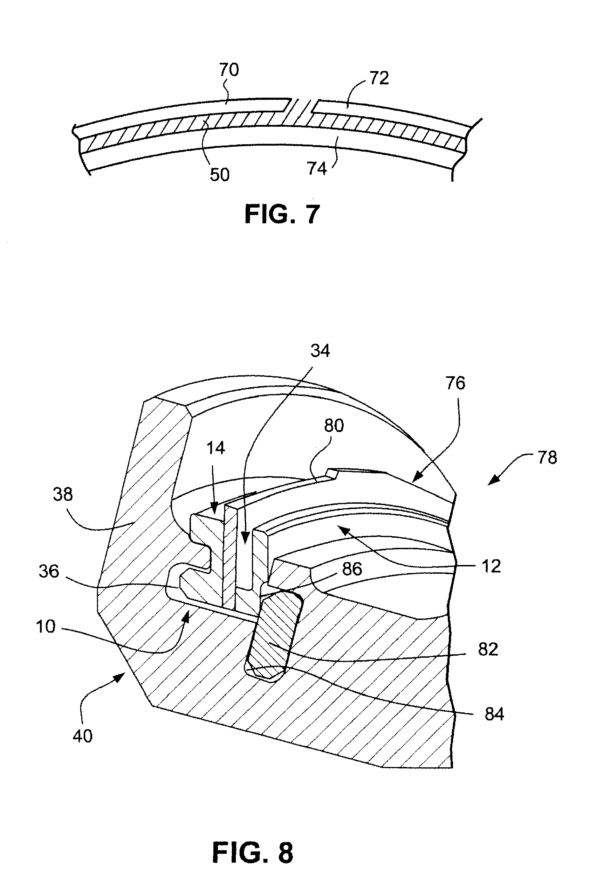

Fig. 7 shows another feature of the invention where the number of shroud segments is greater than the number of brush seal segments, and specifically at the interface of adjacent vane shroud ring segments 70, 72. Because the interfaces of adjacent brush seal segments are circumferentially offset from adjacent shroud ring segments, the bristles 50 of the brush seal segment 74 will extend into and substantially fill the gap between the shroud ring segments.

It is also a feature of this invention that the radial height of the bristle pack may be decreased in those brush seal segments at the horizontal interface or split line of the upper and lower inner barrel half sections (as shown, e.g., in Figs. 5 and 6). Specifically, in one exemplary embodiment shown in Fig. 8, the radial height of the bristle pack 76 may be reduced from the split line end of the segment 78 extending less than 1/10^{th} of the segment circumferential length. The reduced height can be the form of a uniform reduction as shown at 80 or a tapered reduction (shorter to longer in a direction away from the split line). This arrangement facilitates assembly and disassembly of the compressor vane assembly without damaging the bristles of the split line segments of the brush seal assembly 10. The specific differential radial height dimensions may vary depending on turbine model, etc.

It is still another feature to apply wax to the ends of the bristle pack 26 (or 76) during shipping and assembly. Applying a thin layer of wax to the outer ends of the bristles, after canting the bristles to one side as when installed, holds the bristles in the slanted position, thereby protecting the bristles from damage during shipping and handling, as well as during installation. In the exemplary embodiment, if the bristles have a free unsupported radial length, measured from the radially outer surface of the outer hook 24 to the tip of bristle pack 26 in a radial direction of, for example, 0.1 to 0.2 inch, after waxing the radial height of the bristle pack may be reduced to permit a nominal gap at cold build between the bristle pack 26 and the inner diameter of the vane shroud ring 48 of about 0.02 to 0.1 inch The wax will be melted away during operation of the compressor/turbine when the operating temperature reaches about 135-200°F (57-93°C). Carnauba wax has been found to meet the requirements of sustaining integrity of reduced height bristles until assembly, and the melting away completely at turbine operating temperature. Other suitable waxes meeting the specified requirements may be utilized as well.

Fig. 8 also illustrates one or more "keys" 82 may be added in notches or recesses 84 formed in the inner barrel and located to engage the end or ends of one or more segments of the brush seal assembly 10 to prevent rotational movement of the segments within the annular slot 36. To accommodate the key 82, it may be desirable to provide a cut-out 86 in the front plate 12 so that the key 82 does not otherwise interfere with the assembly and positioning of the brush seal carrier segments and to provide a reaction surface against the key. The key 82 may have any desired circumferential length, and, advantageously, will be located at least where the carrier segments interface with the horizontal split line.

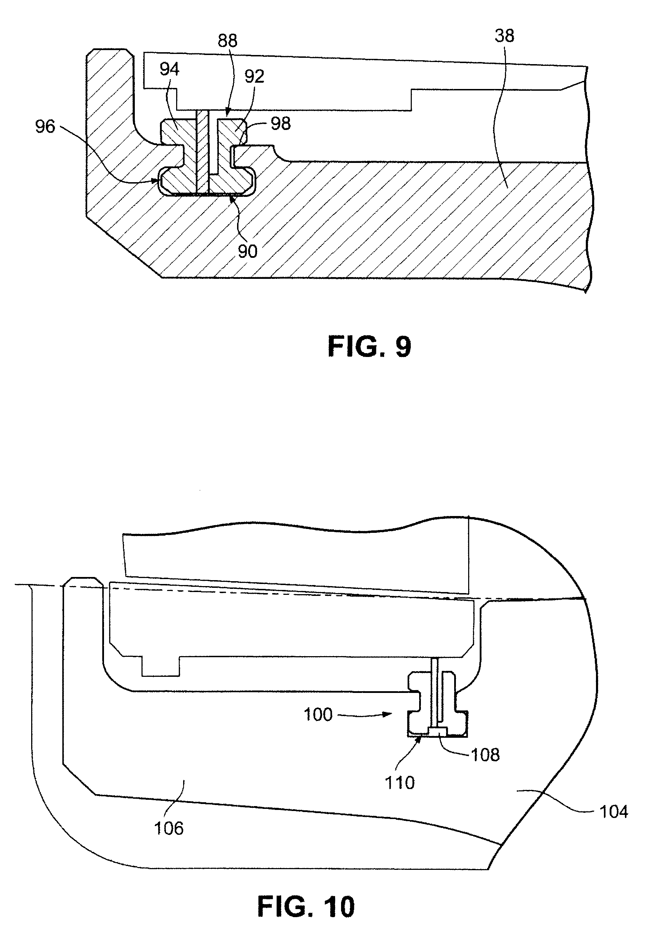

In an alternative exemplary embodiment shown in Fig. 9, a brush seal assembly segment 88 such that the front plate 90 is also provided with an outer hook portion 92 to complement the outer hook portion 94 on the back plate 96 supported on surface 98 of the inner barrel 38. The exact configuration is dependent on the specific compressor/turbine model and an amount of space available to accommodate the structural features of the brush seal carrier segment.

Fig. 10 illustrates yet a further exemplary but nonlimiting embodiment where the brush seal carrier segment 100 is located at an aft portion 104 of the inner barrel 106. The brush seal carrier segment 100 is otherwise substantially similar to the brush seal segment shown in Fig. 1 except that a circumferential groove 108 is formed in the radially inner surface of the inner hook 110.

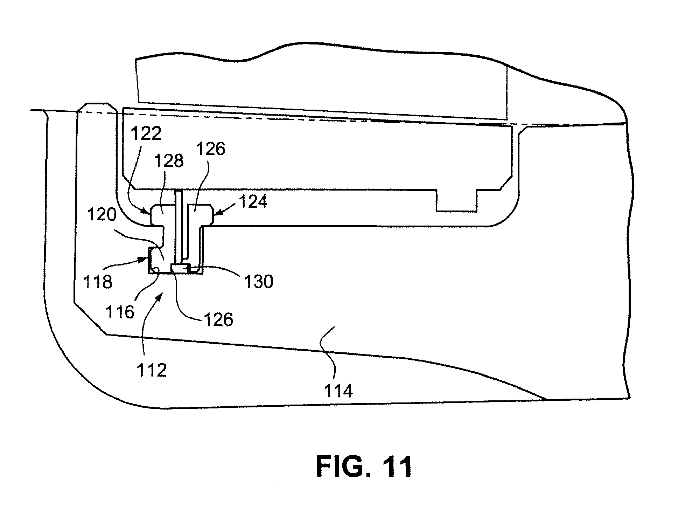

In Fig. 11 another exemplary but nonlimiting embodiment is shown where a brush seal segment 112 is located in a forward portion of the inner barrel 114, similar to Fig. 2, but here, the inner barrel 114 is formed with a reverse L-shaped slot 116 such that the inner hook 118 is provided with a single inner hook portion 120 on the back plate 122. The front plate 124 includes an upper hook portion 126 complementing the upper hook portion 128 of the back plate 122. The brush seal carrier segment 112 is otherwise substantially similar to the brush seal segment shown in Fig. 9, but with an inner annular groove 130 similar to the groove 108 in the carrier segment shown in Fig. 10.

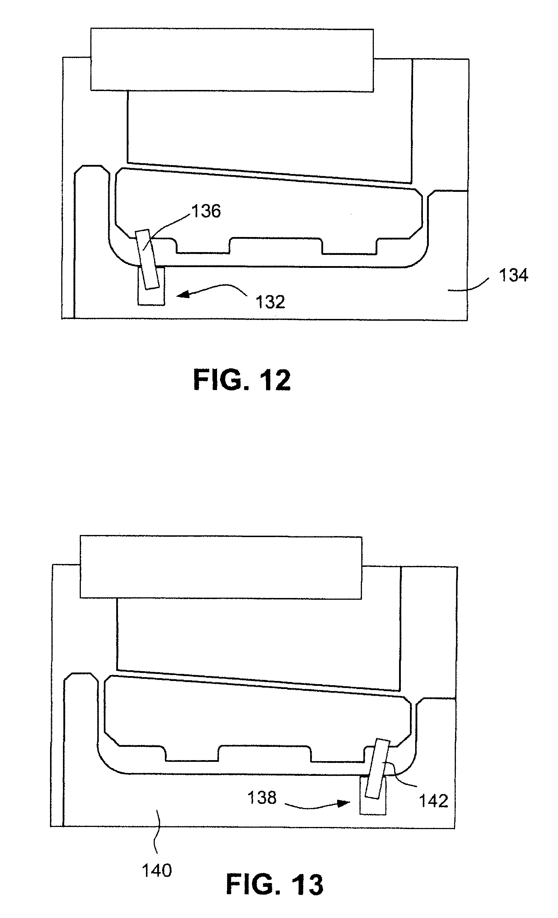

With reference now to Figs. 12 and 13 it is also within the scope of the invention to slant or incline the bristles axially in either an upstream or downstream direction. In Fig. 12, a brush seal carrier segment 132 is located in a forward portion of an inner barrel 134, and the bristle pack 136 is slanted in a forward axial direction. In Figure 13, the brush seal carrier segment 138 is located in an aft portion of an inner barrel 140 with the bristle pack 142 slanted in an aft axial direction.

It will be understood that the bristle packs as described herein may be slanted circumferentially and slanted axially in clockwise, counterclockwise, and fore or aft directions, respectively.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

Various aspects and embodiments of the present invention are defined by the following numbered clauses:
1. A brush seal assembly for use between two stationary turbine components comprising:
   a plurality of arcuate carrier segments, each having a front plate and a back plate having substantially equal radial length dimensions, and a bristle pack sandwiched therebetween, said front plate and said back plate defining a hook portion adapted to be received in an annular slot in a first radially inner turbine component, said bristle pack extending substantially radially outwardly beyond said front and back plates and supported by said back plate along the entire radial length dimension and by said front plate along a minor portion of said radial length dimension, thereby leaving an axial gap between said bristle pack and said front plate along a major portion of said radial length dimension; said bristle pack fixedly secured to said back plate and said front plate along said minor portion of said length dimension; and
   wherein said bristle pack is slanted in a circumferential clockwise or counterclockwise direction and adapted to sealingly contact a second radially outer turbine component.
2. The brush seal assembly of clause 1 wherein said hook portion includes at least one radially-inner flange extending in a first axial direction, a relatively narrow, radially-extending neck portion, and at least one radially-outer flange extending in a second opposite axial direction.
3. The brush seal assembly of clause 2 wherein said at least one radially inner flange includes a second radially inner flange extending in said second opposite axial direction, such that said segment is adapted to be received in an inverted, substantially T-shaped slot in the first radially inner turbine component.
4. The brush seal assembly of clause 2 wherein said at least one radially-outer flange includes a second radially-outer flange extending in said first axial direction.
5. The brush seal assembly of clause 3 wherein said at least one radially-outer flange includes a second radially-outer flange extending in said first axial direction.
6. The brush seal assembly of clause 1 wherein said radially- inner turbine component comprises a compressor discharge casing inner barrel, and said radially-outer turbine component comprises a stator vane shroud ring, and wherein said bristle pack is interference fit with said stator vane shroud ring.
7. The brush seal assembly of clause 6 wherein said brush seal assembly is located at a forward end of said compressor discharge casing inner barrel.
8. The brush seal assembly of clause 6 wherein said brush seal assembly is located at an aft end of said compressor discharge casing inner barrel.
9. The brush seal assembly of clause 6 wherein said bristle pack is inclined axially in forward or aft directions.
10. The brush seal assembly of clause 1 wherein said plurality of arcuate carrier segments include at least three arcuate carrier segments which, when combined, form a half-annular seal terminating at a substantially horizontal split line, and wherein two of said at least three arcuate carrier segments adjacent said split line have bristle packs with radial length dimensions less than remaining ones of said at least three arcuate carrier segments.
11. A brush seal assembly located between radially inner and radially outer turbine components, substantially concentrically arranged relative to each other, and each having upper and lower half-sections joined along a substantially horizontal split line, comprising:
   at least three arcuate brush seal segments seated in an arcuate slot in said radially inner turbine component and which, when combined, form a half-annular seal terminating at said substantially horizontal split line; each of said at least three arcuate brush seal segments having a front plate and a back plate and a bristle pack sandwiched therebetween, said bristle pack extending substantially radially outwardly beyond said front and back plates and engaged with said radially-outer turbine component in a cold condition and slanted in a circumferential clockwise or counterclockwise direction; and
   wherein two of said at least three arcuate brush seal segments adjacent said substantially horizontal split line of said upper and lower half sections have bristle packs with radial length dimensions less than remaining ones of said at least three arcuate brush seal segments.
12. The brush seal assembly of clause 11 wherein said radially inner and radially outer turbine components are each comprised of plural arcuate segments, and wherein the segments of said radially outer turbine component are, in number, equal to or greater than the segments of said brush seal assembly.
13. The brush seal assembly of clause 12 wherein said radially outer turbine component comprises a an annular stator vane shroud ring and said radially inner component comprises a compressor discharge casing inner barrel, and wherein said brush seal assembly is arranged to minimize leakage flow in a direction opposite a direction of main flow through the compressor.
14. The brush seal assembly of clause 12 wherein said radially outer turbine component comprises a an annular stator vane shroud ring and said radially inner component comprises a compressor discharge casing inner barrel, and wherein said brush seal assembly is arranged to minimize leakage flow in a direction that is the same as a direction of main flow through the compressor.
15. The brush seal assembly of clause 12 wherein said bristle pack is slanted axially in forward or aft directions.
16. The brush seal assembly of clause 11 wherein two of said at least three arcuate carrier segments adjacent said split line are fitted with anti-rotation keys that prevent rotation of said at least three arcuate carrier segments within said arcuate slot.
17. The brush seal assembly of clause 11 wherein front plate and said back plate have substantially equal radial length dimensions, and wherein said bristle pack is supported by said back plate along the entire radial length dimension and by said front plate along a minor portion of said radial length dimension, thereby leaving an axial gap between said bristle pack and said front plate along a major portion of said radial length dimension; said bristle pack fixedly secured to said back plate and said front plate along said minor portion of said length dimension.
18. A brush seal assembly located radially between an annular inner barrel of a compressor and an annular stator vane shroud ring for preventing leakage flow in a direction opposite to a direction of main flow through the compressor, the shroud ring comprised of plural arcuate shroud ring segments, and wherein the annular inner barrel and the stator vane shroud ring each have upper and lower half-sections joined along a substantially horizontal split line, the brush seal assembly comprising:
   a plurality of arcuate brush seal segments seated in an annular slot formed in said inner barrel, each of said plurality of arcuate brush seal segments having a front plate and a back plate and a bristle pack sandwiched therebetween, said bristle pack extending radially outwardly beyond said front and back plates and engaged with said stator vane shroud ring in a cold condition, said bristle pack slanted in a circumferential clockwise or counterclockwise direction and in an axial forward or aft direction; and wherein said arcuate shroud ring segments are, in number, equal to or unequal to said brush seal segments.
19. The brush seal assembly of clause 18 wherein front plate and said back plate have substantially equal radial length dimensions, and wherein said bristle pack is supported by said back plate along the entire radial length dimension and by said front plate along a minor portion of said radial length dimension, thereby leaving an axial gap between said bristle pack and said front plate along a major portion of said radial length dimension; said bristle pack fixedly secured to said back plate and said front plate along said minor portion of said length dimension.
20. The brush assembly of clause 18 wherein an anti-rotation key is engaged between at least one of said plurality of arcuate carrier segments and said annular slot to prevent circumferential rotation of said at least one of said plurality of arcuate carrier segments within said slot.

## Claims

1. A brush seal assembly (10) for use between two stationary turbine (38,48) components comprising:
a plurality of arcuate carrier segments, each having a front plate (12) and a back plate (14) having substantially equal radial length dimensions, and a bristle pack (26) sandwiched therebetween, said front plate (12) and said back plate defining a hook portion (16) adapted to be received in an annular slot (36) in a first radially inner turbine component (38), said bristle pack (26) extending substantially radially outwardly beyond said front and back plates and supported by said back plate (14) along the entire radial length dimension and by said front plate (12) along a minor portion of said radial length dimension, thereby leaving an axial gap (34) between said bristle pack (26) and said front plate (12) along a major portion of said radial length dimension; said bristle pack (26) fixedly secured to said back plate and said front plate along said minor portion of said length dimension; and
wherein said bristle pack (26) or (50) is slanted in a circumferential clockwise or counterclockwise direction and adapted to sealingly contact a second radially outer turbine component (48).

2. The brush seal assembly of claim 1, wherein said hook portion (16) includes at least one radially-inner flange (18) extending in a first axial direction, a relatively narrow, radially-extending neck portion (22), and at least one radially-outer flange (24) extending in said first axial direction.

3. The brush seal assembly of claim 2, wherein said at least one radially inner flange (20) includes a second radially inner flange extending in a second opposite axial direction, such that said segment is adapted to be received in an inverted, substantially T-shaped slot (36) in the first radially inner turbine component (38).

4. The brush seal assembly of claim 2 or claim 3, wherein said at least one radially-outer flange (24) includes a second radially-outer flange (92) extending in said second opposite direction.

5. The brush seal assembly of any one of claims 1 to 4, wherein said radially-inner turbine component (38) comprises a compressor discharge casing inner barrel, and said radially-outer turbine component (48) comprises a stator vane shroud ring, and wherein said bristle pack (26) is interference fit with said stator vane shroud ring.

6. The brush seal assembly of claim 5 wherein said brush seal assembly (10) is located at a forward end of said compressor discharge casing inner barrel (38).

7. The brush seal assembly of claim 5 or claim 6 wherein said brush seal assembly (100) is located at an aft end of said compressor discharge casing inner barrel.

8. The brush seal assembly of any of claims 5 to 7, wherein said bristle pack (136,142) is inclined axially in forward or aft directions.

9. A brush seal assembly 10 located between radially inner and radially outer turbine components (38,48), substantially concentrically arranged relative to each other, and each having upper and lower half-sections joined along a substantially horizontal split line, comprising:
at least three arcuate brush seal segments seated in an arcuate slot (36) in said radially inner turbine component and which, when combined, form a half-annular seal terminating at said substantially horizontal split line; each of said at least three arcuate brush seal segments having a front plate (12) and a back plate (14) and a bristle pack (26) sandwiched therebetween, said bristle pack (26) or (50) extending substantially radially outwardly beyond said front and back plates (12,14) and engaged with said radially-outer turbine component (48) in a cold condition and slanted in a circumferential clockwise or counterclockwise direction; and
wherein two of said at least three arcuate brush seal segments adjacent said substantially horizontal split line of said upper and lower half sections have bristle packs (76) with radial length dimensions less than remaining ones of said at least three arcuate brush seal segments.

10. The brush seal assembly of claim 9, wherein said radially inner and radially outer turbine components (38,48) are each comprised of plural arcuate segments, and wherein the segments of said radially outer turbine component are, in number, equal to or greater than the segments of said brush seal assembly.

11. The brush seal assembly of claim 10, wherein said radially outer turbine component (48) comprises a an annular stator vane shroud ring and said radially inner component (38) comprises a compressor discharge casing inner barrel, and wherein said brush seal assembly is arranged to minimize leakage flow in a direction opposite a direction of main flow through the compressor.

12. The brush seal assembly of claim 10, wherein said radially outer turbine component (48) comprises a an annular stator vane shroud ring and said radially inner component (38) comprises a compressor discharge casing inner barrel, and wherein said brush seal assembly is arranged to minimize leakage flow in a direction that is the same as a direction of main flow through the compressor.

13. The brush seal assembly of any one of claims 9 to 12, wherein said bristle pack (136,142) is slanted axially in forward or aft directions.

14. The brush seal assembly of any one of claims 9 to 13, wherein two of said at least three arcuate carrier segments adjacent said split line are fitted with anti-rotation keys (82) that prevent rotation of said at least three arcuate carrier segments within said arcuate slot (36).

15. A brush seal assembly located radially between an annular inner barrel of a compressor and an annular stator vane shroud ring for preventing leakage flow in a direction opposite to a direction of main flow through the compressor, the shroud ring comprised of plural arcuate shroud ring segments, and wherein the annular inner barrel and the stator vane shroud ring each have upper and lower half-sections joined along a substantially horizontal split line, the brush seal assembly comprising:
a plurality of arcuate brush seal segments seated in an annular slot formed in said inner barrel, each of said plurality of arcuate brush seal segments having a front plate and a back plate and a bristle pack sandwiched therebetween, said bristle pack extending radially outwardly beyond said front and back plates and engaged with said stator vane shroud ring in a cold condition, said bristle pack slanted in a circumferential clockwise or counterclockwise direction and in an axial forward or aft direction; and wherein said arcuate shroud ring segments are, in number, equal to or unequal to said brush seal segments.
